# EUROPEAN PATENT APPLICATION

(11) **EP 3 269 776 A1**
(43) Date of publication of application: **17.01.2018**
(21) Application number: 17178978.7
(22) Date of filing: 30.06.2017
(51) Int. Cl.: C08L 95/00, C08L 29/14, C08L 23/12, C08K 5/10, D06N 5/00

(54) **A WATERPROOFING MEMBRANE COMPOSITION, PROCESS FOR MANUFACTURING SAID COMPOSITION AND USES THEREOF**

(30) Priority: 30.06.2016 BE 201605509; 30.06.2016 EP 16177042
(71) Applicant: Imperbel, 1651 Lot (BE)
(72) Inventor: AERTS, Hans, 1731 ZELLIK (BE); VERDEBOUT, Renaud, 5030 GEMBLOUX (BE); MARTIN, Caroline, 1651 LOT (BE)
(74) Representative: Gevers Patents

(57) **Abstract**

A waterproofing membrane composition comprising PVB, polymer modified bitumen, a compatibilizing agent selected from the group consisting of a succinate mixed ester of benzyl and of branched nonyl or decyl, a bis(ethoxylated alkyl) succinate, a composition comprising aliphatic polycarboxylic acid esters of formula R'-X-[O-C(O)-R]n, or a mixture thereof.

## Description

The present invention relates to a waterproofing membrane composition comprising polyvinyl butyral (PVB), bitumen and at least one compatibilizing agent.

US 4,277,533 discloses a waterproofing sheet material useful as a free floating membrane or flashing material in roofing applications.

The waterproofing sheet material can be composed of coal tar pitch in an amount comprised between 15-20 weight % up to about 80 % weight and plasticized PVB in a quantity comprised between 80-85 weight % or about 20 %.

There is plasticized PVB in sheet form contained in intermediate layers which form safety glass in the automotive industry. This type of plasticized PVB is used to form the aforementioned waterproofing sheet material.

The manufacturing of plasticized PVB includes the use of virgin PVB which is then mixed with a plasticizer which can be triethylene glycol di-2-ethylbutyrate, diethylene glycol di-2-ethylbutyrate, dibutyl sebacate, and esters of di-or triethylene glycol with caprilic, lauric or other long chain acids.

This document also teaches the possibility of using unplasticized PVB but it will involve the plasticizing of this virgin PVB in order to manufacture the waterproofing sheet material.

In this document, plasticized or plasticized-free PVB is mixed with coal tar pitch. However, coal tar pitch is less attractive than bitumen in terms of physical and chemical properties, such as weathering properties, supporting temperature changes, brittleness, etc.

WO 2009 086 087 relates to a bituminous mixture which comprises thermoplastic polymer membranes applicable in road paving and roofing industries.

This document teaches that plasticized or plasticized-free PVB cannot be homogeneously mixed with molten bitumen since it forms heterogeneous mixtures.

In this document, the bituminous mixture comprises from 2 to 8 weight % of bitumen, from 27 to 98 weight % of mineral aggregates, inorganic fillers and mineral aggregates with a particle size of less than 4 mm. The mineral aggregates are completely coated with thermoplastic polymer composition. The latter can be selected from the group consisting of polyolefins, polyamides, polyesters, polyvinyl acetates, styrene-based block copolymers, PVC and PVB.

PVB can be a virgin PVB which has not be used in any industry or a recovered or recycled PVB coming from the automotive industry.

As explained above, PVB, when used in laminated glass, comprises one or several plasticizers in order to provide a balance of mechanical properties.

A recycled or recovered PVB may comprise between 70-99,5 weight % of PVB, between 0,5-20 weight % of glass and between 0-10 weight % of other inorganic and/or organic components, each weight % being expressed in relation to the total weight of the PVB composition.

In this document, PVB is thereby not directly mixed with molten bitumen but only used for coating aggregates, which can then be mixed with a relatively small amount of bitumen in the final composition.

US 5,360,848 discloses modified bitumen in the presence of solubilizing agent and plasticized PVB to form a homogeneous bituminous mixtures. The solubilizing agent is essential in this mixture since plasticized PVB cannot be homogeneously mixed with molten bitumen.

In this document, bitumen is modified by the solubilizing agent.

There is therefore a need to provide an improved waterproofing membrane composition where it is possible to mix PVB with bitumen. In this way, different types of PVB (plasticized PVB, virgin PVB, production PVB, etc.) can be upcycled in a bituminous composition.

It is an object of the invention to provide a waterproofing membrane composition where PVB, recycled PVB and/or even production PVB can be mixed with bitumen in an efficient way, by decreasing the risk of having an heterogeneous mixture. In this way, a waterproofing membrane composition with enhanced physical and mechanical properties can be provided without affecting the properties of the final composition.

To solve this problem, the invention provides a waterproofing membrane composition comprising active membrane compounds containing:
- Polyvinyl butyral (PVB),
- Polymer modified bitumen, where the polymer forms a polymeric matrix, wherein bitumen and PVB are retained,
- At least one compatibilizing agent selected from the group consisting of
   ∘ A succinate mixed ester of benzyl and of branched nonyl or decyl,
   ∘ A bis(ethoxylated alkyl) succinate,
   ∘ A composition comprising aliphatic polycarboxylic acid esters of formula:

      ▪ R'-X-[O-C(O)-R]n

      wherein
      R is preferably selected from the group consisting of epoxidized oleic, linoleic, and linolenic acid and mixture thereof, or R is equal to R¹ being a tetrahydrofurfuryl group, or a substituted tetrahydrofurfuryl group, or R is equal to R² being an alkoxylated alkyl group, or a substituted alkoxylated alkyl group, different from R¹;
      R' is a methyl group when R is selected from the group consisting of epoxidized oleic, linoleic, and linolenic acid and mixture thereof, X is CH₂- radical and n is 1; or R' is Y-OC(O)-group wherein Y is equal to R¹ being a tetrahydrofurfuryl group, or a substituted tetrahydrofurfuryl group, or Y is equal to R² being an alkoxylated alkyl group, or a substituted alkoxylated alkyl group, different from R¹ ,
      X is an alkyl group, preferably an ethyl group, or an hydroxyl-substituted alkyl group comprising from 1 to 4 carbon atoms, and n is 1 or 2,
or mixture thereof.

This compatibilizing agent acts as a process aid for membrane production and will contribute to anchor bitumen and PVB into the polymeric matrix formed by the polymer when the phase inversion occurs.

The final composition will have advantageous properties in terms of UV stability, hardness, density, ductility and this makes the composition suitable for finished products, such as waterproofing membrane or floor tiles.

The selection of these specific compatibilizing agents enables guaranteeing the formation of a mixture where, whatever the type of PVB, the latter will be anchored in the polymeric matrix with bitumen.

It is surprising to note that PVB and the compatibilizing agent do not adversely affect the polymeric matrix which contains the bitumen.

Typically, polymer modified bitumen is obtained by mixing bitumen, having preferably a sol structure, with a polymer. The addition of the polymer to the bitumen leads to a phase inversion, corresponding to the moment at which the amount of polymer is sufficient to form a polymeric matrix, where bitumen can be retained/anchored. When the phase inversion occurs, the bitumen having the behaviour of a Newtonian liquid will have the properties of a viscoelastic fluid. In this way, polymer modified bitumen can be used in several fields of technology, such as in waterproofing products, in particular in roof covering.

The polymer of the present invention has particular chemical interactions with bitumen and the plasticized PVB. The polymer forms a continuous phase (polymeric matrix). When the phase inversion occurs, the bitumen and the plasticized PVB are retained into the polymeric matrix giving the adequate viscoelastic properties and the stability to the composition. The presence of the compatibilizing agent will increase this effect leading to a reduction of the amount of polymer in the final composition. This is economically advantageous.

The composition of the present invention can be used for manufacturing a waterproofing membrane having an appropriate flexibility which is an advantageous criterion, for example when the waterproofing membrane is applied on a roof.

Moreover, the compatibilizing agent of the present invention is compatible with several types of PVB which may comprise different content of PVB and, preferably plasticizers.

It is therefore advantageous to provide a composition where several PVB sources can be upcycled in a bituminous composition.

The term 'homogeneous' refers to a composition which is microscopically and macroscopically homogeneous. This means that the plasticized PVB and the bitumen are both retained in the polymeric matrix formed by the polymer, when the phase inversion occurs and that a single phase structure is obtained.

Advantageously, the aliphatic polycarboxylic acid esters is of formula (II) and of formula (I) or (III):

- R'-X-[C(O)O-R¹]n (I)

- R'-X-[C(O)O-R²]n (II)

- R'-X-[C(O)O-R²]n (III)

Wherein
R' is Y-OC(O)- group wherein Y is equal to R¹ being a tetrahydrofurfuryl group, or a substituted tetrahydrofurfuryl group, or Y is equal to R² being an alkoxylated alkyl group, or a substituted alkoxylated alkyl group, different from R¹.

In a preferred embodiment of the composition of the present invention, the aliphatic polycarboxylic acid esters is an epoxidized epoxy soyate being derived from vegetable oils and presenting the following formula:

CH₃-CH₂-O-C(O)-R,

wherein R is preferably selected from the group consisting of epoxidized oleic, linoleic, linolenic acid and mixture thereof.

The composition of the present invention, preferably comprises between 0,01 and 10 % in weight, preferably between 0,01-5 % in weight, of said compatibilizing agent, with respect to the total weight of the composition.

This is advantageous since an amount of at most 10 weight %, preferably at most 5 weight % of the compatibilizing agent is necessary in the composition of the present invention to provide an homogeneous composition which can be used in several fields of technology, in particular in waterproofing products such as roof membranes, tiles membranes, etc.

Advantageously, the composition of the present invention comprises between 0,01 and 20 % in weight of PVB, preferably between 0,01 and 17 % in weight, more preferably between 0,01 and 14 % in weight, most preferably between 0,01 to 13 % in weight with respect to the total weight of the composition.

In a preferred embodiment of the present invention, the composition of the present invention comprises between 3 to 14 % in weight of PVB, with respect to the total weight of the composition.

In a particular embodiment of the composition of the present invention, the PVB is chosen from the group consisting of a recycled plasticized PVB, a production plasticized PVB and a virgin PVB, preferably coming from the automotive industry.

In a particular embodiment, the composition of the present invention comprises between 65 and 95 % in weight, preferably between 85 and 90 % in weight, more preferably equal to 85 % in weight of a recycled plasticized PVB or a virgin PVB, and between 5 and 25% in weight, preferably between 10-20 % in weight, more preferably equal to 15 % in weight of the compatibilizing agent, each weight percent is expressed in relation to a mixture comprising the compatibilizing agent and the virgin or plasticized PVB.

Surprisingly, it has been observed that even with a high amount of bitumen, it is possible to obtain an homogeneous mixture thanks to the presence of adequate and efficient compatibilizing agents in the final composition.

More preferably, the recycled or production plasticized PVB, preferably coming from the automotive industry, comprises a plasticizer different from said compatibilizing agent.

This specific preferred option enables using different types of recycled or production plasticized PVB, where both PVB's have been plasticized. In fact, the compatibilizing agent, which is different from the plasticizer used to provide the recycled or production plasticized PVB, is highly efficient in the way that it enables the formation of an homogeneous mixture whatever plasticizer may have been used previously.

In a more preferably embodiment, bitumen is present in an amount comprised between 40 and 80 weight %, with respect to the total weight of the composition.

Advantageously, the polymer is present in an amount comprised between 0,1 and 30 weight %, with respect to the total weight of the composition.

In a preferred embodiment, the polymer to modify the bitumen is chosen from the group consisting of Styrene-Butadiene-Styrene (SBS), Styrene-Ethylene-Butene-Styrene (SEBS), Styrene-EthylenePropylene-Styrene (SEPS), Dimethyl-Gamma-Butyrolactone Acrylate (DBA), Styrene-Isoprene-Styrene (SIS), Polyisobutylene (PIB), Polyhydroxybutyrate, Atactic Polypropylene (APP), Isotactic Polypropylene (IPP), Syndiotactic Polypropylene (SPP), Ethylene-Vinyl-Acetate (EVA) and combinations thereof.

Other embodiments of the waterproofing membrane composition of the present invention are mentioned in the annexed claims.

The invention also relates to a process for manufacturing the waterproofing membrane composition according to any one of the preceding claims, comprising the steps of:
- Mixing the PVB with bitumen and at least one compatibilizing agent for forming a mixture at a predetermined temperature,
- Adding a polymer to the mixture until reaching the phase inversion in order to provide polymer modified bitumen, where the polymer forms a polymeric matrix, wherein bitumen and PVB are anchored/retained.

It has been surprisingly observed that mixing preferably the PVB with the compatibilizing agent first before mixing it with bitumen enables facilitating the obtaining of an homogeneous composition where the PVB and the compatibilizing agent are sufficiently dispersed in the composition.

Preferably, the predetermined temperature is of at least 180 °C, more preferably at least 190 °C, most preferably 195 °C.

Preferably, the process comprises a step of applying the homogeneous composition on a support, preferably on one side of at least one reinforcement layer.

More preferably, the process comprises a step of adding a filler to the homogeneous composition, which filler is chosen from the group consisting of calcium carbonate and preferably colemanite or aluminate trihydrate (ATH).

More preferably, the filler is present in an amount comprised between 10-40 % in weight, preferably between 10-30 % in weight, more preferably between 10-25 % in weight with respect to the total weight of the composition.

Other embodiments of the process for manufacturing the composition of the present invention are mentioned in the annexed claims.

The invention also relates to a roof waterproofing membrane provided with at least one reinforcement layer impregnated with a composition according to the present invention.

The present invention may relate to a roof waterproofing membrane comprising a reinforcement layer having a first face and a second face. At least one of the first and second faces is impregnated with the composition of the present invention.

Advantageously, the roof waterproofing membrane of the present invention comprises between 0,01 and 10 % in weight, preferably between 0,01-5 % in weight, of said compatibilizing agent, with respect to the total weight of the composition.

Preferably, the roof comprises between 0,01 and 20 % in weight of PVB, preferably between 0,01 and 17 % in weight, more preferably between 0,01 and 14 % in weight, most preferably between 0,01 to 13 % in weight with respect to the total weight of the composition.

More preferably, the roof comprises the composition of the present invention, wherein the PVB is chosen from the group consisting of a recycled plasticized PVB, a production plasticized PVB and a virgin PVB, preferably coming from the automotive industry.

In a particular embodiment of the roof of the present invention comprises between 65 and 95 % in weight, preferably between 85 and 90 % in weight, more preferably equal to 85 % in weight of a recycled plasticized PVB or a virgin PVB, and between 5 and 25% in weight, preferably between 10-20 % in weight, more preferably equal to 15 % in weight of the compatibilizing agent, each weight percent is expressed in relation to a mixture comprising the compatibilizing agent and the virgin or plasticized PVB.

In a particular embodiment, the recycled or production plasticized PVB, preferably coming from the automotive industry, comprises a plasticizer different from said compatibilizing agent.

In a more preferably embodiment, bitumen is present in an amount comprised between 40 and 80 weight %, with respect to the total weight of the composition.

Advantageously, the polymer is present in an amount comprised between 0,1 and 30 weight %, with respect to the total weight of the composition.

More advantageously, the polymer to modify the bitumen is chosen from the group consisting of Styrene-Butadiene-Styrene (SBS), Styrene-Ethylene-Butene-Styrene (SEBS), Styrene-Ethylene-Propylene-Styrene (SEPS), Dimethyl-Gamma-Butyrolactone Acrylate (DBA), Styrene-Isoprene-Styrene (SIS), Polyisobutylene (PIB), Polyhydroxybutyrate, Atactic Polypropylene (APP), Isotactic Polypropylene (IPP), Syndiotactic Polypropylene (SPP), Ethylene-Vinyl-Acetate (EVA) and combinations thereof.

Other embodiments of the roof waterproofing membrane of the present invention are mentioned in the annexed claims or in the following description.

The present invention also relates to a process for manufacturing a waterproofing membrane for roof covering comprising the steps of:
- Providing a reinforcement layer having a first face and a second face,
- Impregnating the composition of the present invention on at least the first face of the reinforcement layer to provide the waterproofing membrane for roof covering.

The process for manufacturing a waterproofing membrane is preferably limited to the manufacturing of a roof covering waterproofing membrane which comprises a reinforcement layer having a first face and a second face wherein at least one of the first and second faces is impregnated with the composition of the present invention.

More preferably, both first and second faces of the reinforcement layer are impregnated with the composition of the present invention.

All the features mentioned above for the roof waterproofing membrane can be used to limit the process for manufacturing the waterproofing membrane for roof covering.

The invention also relates to the use of the composition of the present invention for waterproofing applications, preferably for the manufacturing of a roofing membrane or tile, floor tile or membrane or bitumen emulsion.

Other embodiments of the use in the present invention are mentioned in the annexed claims.

Other characteristics and advantages of the invention will appear more clearly in the light of the following description of a particular non-limiting embodiment of the invention.

In the context of the present invention, the terms 'comprises', 'comprising', 'includes', 'including', 'containing', 'characterized by', 'has', 'having' or any other synonym or variation thereof refer to a non-exclusive inclusion. For example, a composition, process, use or article, that is described as comprising a particular list of elements is not necessarily limited to those particularly listed elements but may further include other elements not expressly listed or inherent to such a composition, process, use or article.

The transitional phrase "consisting of excludes any element, step, or ingredient not specified in the claim, closing the claim to the inclusion of materials other than those recited except for impurities ordinarily associated therewith.

Where an invention or a portion thereof is described with an open-ended term such as 'comprising', it is to be understood that, unless otherwise stated in specific circumstances, this description also includes a description of the invention using the terms 'consisting of as it is defined above.

All fillers for use in bitumen-based binder compounds can be used in the composition of the present invention. Examples of fillers are talcum and CaCO₃ and, silica, rock meal, fly ash, limestone meal, calcium hydrate, organic filler such as meal, flour, sawdust.

In the context of the present invention, the PVB can come from different fields of technology, in particular from the glass industry, from the automotive industry or from the building/construction industry.

In the meaning of the present invention, it has to be understood by the term 'production plasticized PVB' a compound having between 60-80 weight %, preferably between 70-80 weight %, more preferably equal to about 75 weight % of PVB and between 20-40 weight %, preferably between 20-35 weight %, more preferably equal to about 25 weight %, of a plasticizer.

This type of product can be used directly as interlayer in glass sheet since he does have the adequate properties to be used, for instance in automotive industry, preferably in glass industry.

Preferably, the production plasticized PVB comprises as plasticizer tri(ethylene glycol) bis(2-ethylhexanoate).

Such production plasticized PVB can be provided, for example, by the firm Socaplast, Hainauplast or Kuraray.

In the meaning of the present invention, it has to be understood by the term ' recycled plasticized PVB' a compound comprising PVB and one or several plasticizers different from the compatibilizing agent of the present invention.

The recycled plasticized PVB can be a compound used in laminated glass and after use, it is possible to recover such type of recycled plasticized PVB in order to use it in the composition of the present invention.

Such recycled plasticized PVB can be provided by Minérale's firm.

In the meaning of the present invention, it has to be understood by the term ' virgin PVB' a compound which substantially free of any additional amount of a plasticizers. Such PVB can be manufactured by techniques well known in the state of the art.

Virgin PVB can be provided by Mowital's firm. Some non-limiting examples are indicated in the table below.

| Products | Non-volatile content (DIN 53216) | Content of polyvinyl alcohol (hydroxyl groups in terms of polyvinyl alcohol) | Content of polyvinyl acetate (Acetyl groups in terms of polyvinyl acetate) | Dynamic viscosity (according to Hoeppler, DIN 53015, at 20°C) 10% solution in Ethanol (containing 5 % water) |
|---|---|---|---|---|
| | Weight % | Weight % | Weight % | mPa . S |
| Mowital B 16 H | >97,5 | 18-21 | 1-4 | 14-20 |
| Mowital B 20 H | >97,5 | 18-21 | 1-4 | 20-30 |
| Mowital B 30 T | >97,5 | 24-27 | 1-4 | 30-55 |
| Mowital B 30 H | >97,5 | 18-21 | 1-4 | 35-60 |
| Mowital B 30 | >97,5 | 11-14 | 1-4 | 35-60 |
| HH | | | | |
| Mowital B 45 M | >97,5 | 21-24 | 1-4 | 80-110 |
| Mowital B 45 H | >97,5 | 18-21 | 1-4 | 60-90 |
| Mowital B 60 T | >97,5 | 24-27 | 1-4 | 180-280 |
| Mowital B 60 H | >97,5 | 18-21 | 1-4 | 160-260 |
| Mowital B 60 HH | >97,5 | 12-16 | 1-4 | 120-280 |
| Mowital B 75 | >97,5 | 18-21 | 0-4 | 60-100 |

The aliphatic polycarboxylic acid esters may be of formula (II) and of formula (I) or (III):

- R'-X-[C(O)O-R¹]n (I)

- R'-X-[C(O)O-R²]n (II)

- R'-X-[C(O)O-R²]n (III)

Wherein,
R' is Y-OC(O)- group, wherein Y is equal to R¹ being a tetrahydrofurfuryl group, or a substituted tetrahydrofurfuryl group, or Y is equal to R² being an alkoxylated alkyl group, or a substituted alkoxylated alkyl group, different from R¹.

Preferably, X is the alkyl rest of an aliphatic polycarboxylic acid selected from the group consisting of succinic acid, glutaric acid, adipic acid and citric acid.

More preferably, R² is butyldiglycolate and X is preferably the alkyl ret of succinate.

In a preferred embodiment, the aliphatic polycarboxylic acid esters comprises formula I, II and III.

In a preferred embodiment of the present invention, the aliphatic polycarboxylic acid esters comprises formula II which is present in an amount comprised between 10 to 90 weight %, preferably from 30-70 weight %, relative to the total amount of the aliphatic polycarboxylic acid esters.

The process of manufacturing the aliphatic polycarboxylic acid esters of the present invention may be the one disclosed in WO 2015090620, which is incorporated by reference in the present application for the description relating to the process of manufacturing.

The compatibilizing agent can be the succinate mixed ester of benzyl and of branched nonyl or decyl.

Preferably, this compatibilizing agent may comprise a di-ester of di-benzyl succinate or di-nonyl succinate or di-decyl succinate.

More preferably, the succinate mixed ester comprises at least 30 mole % of the total amount of succinates in the mixed ester.

In a preferred embodiment of the present invention, the succinate mixed ester is benzyl-2-propylheptyl-succinate or benzyl-isononyl-succinate.

The process of manufacturing the succinate mixed ester of the present invention may be the one disclosed in WO 2014040146, which is incorporated by reference in the present application for the description relating to the process of manufacturing.

The compatibilizing agent of the present invention can be the bis(ethoxylated alkyl) succinate.

Preferably, the alkyl is selected from the group consisting of ethyl, propyl and butyl.

More preferably, the succinate is selected from the group consisting of bis(butyldiglycol)succinate, bis(butyltriglycol)succinate or bis(butyltetraglycol)succinate.

The chemical formula of bis(butyldiglycol)succinate is as follows :

CH₃-CH₂-CH₂-CH₂-O-CH₂-CH₂-O-CH₂-CH_{Z}-O-CO-CH₂-CH₂-CO-O-CH₂-CH₂-O-CH₂-CH₂-O-CH₂-CH₂-CH₂-CH₃

The process of manufacturing the succinate of the present invention may be the one disclosed in WO 2015090619, which is incorporated by reference in the present application for the description relating to the process of manufacturing, for the details regarding the aforementioned compound and for the properties of these compounds.

The compatibilizing agent of the present invention can also be the epoxidized epoxy soyate which is preferably derived from vegetable oils and presents the following formula:

CH₃-CH₂-O-C(O)-R,

wherein R is preferably selected from the group consisting of epoxidized oleic, linoleic, linolenic acid and mixture thereof.

Preferably, said epoxidized epoxy soyate is epoxidized ethyl ester.

More preferably, said epoxidized epoxy soyate is epoxidized ethyl soyate.

In a particular embodiment of the present invention, the epoxidized epoxy soyate has oxirane index equal to or less than 8, as disclosed in the EP 207 09 80.

The process of manufacturing the epoxidized epoxy soyate of the present invention may be the one disclosed in EP 207 09 80, which is incorporated by reference in the present application for the description relating to the process of manufacturing, for the details regarding the aforementioned compound and for the properties of these compounds.

In the context of the present invention, the process of manufacturing the waterproofing membrane composition of the present invention comprises the steps of:
- Mixing PVB with bitumen and at least one compatibilizing agent for forming a mixture,
- Adding a polymer to the mixture until reaching the phase inversion to provide polymer modified bitumen, where the polymer forms a polymeric matrix, wherein bitumen and PVB are retained.

Preferably, the compatibilizing agent is mixed with the PVB first and then the obtained mixture is added to polymer modified bitumen.

More preferably, the polymer modified bitumen is obtained by adding polymer to the bitumen until reaching the phase inversion corresponding to the moment where the amount of polymer in bitumen is such that a matrix made of polymer is formed wherein the bitumen is anchored.

After obtaining the homogeneous composition, the process may comprise a further step of adding a filler to the homogeneous composition, which filler is chosen from the group consisting of calcium carbonate and preferably colemanite or aluminate trihydrate (ATH).

Preferably, the filler is added into the composition after the polymer.

The composition of the present invention can be used to manufacture a roof covering waterproofing membrane.

The performances of the composition of the present invention can be estimated through several parameters such as ring & ball softening point, needle penetration, viscosity and flexibility.

The ring & ball softening point is defined at the temperature at which the bitumen attains a specific consistency. According to the present invention, the ring & ball softening point has been measured at two temperatures. The first ring & ball softening point corresponds to the temperature at which the ball starts to pass through the ring and the second ring & ball softening point is measured according the NF EN 1427 or ASTM D36 standard.

The needle penetration at 60 °C consists in measuring the hardness of bitumen under specified conditions. The indentation of bitumen in tenths of a millimetre (dmm) at 60 °C is measured by using a standard needle with a loading of 100 g during 5 second. The needle penetration at 60 °C is realised according to the ASTM D5 standard.

The viscosity is an advantageous criterion because it allows to estimate if bitumen can be used in different field of technology such as in waterproofing products. The viscosity of bitumen used in the present invention is preferably comprised between 1500 - 30000 cps at 180 °C, preferably 5000 - 15000 cps at 180°C, measured according to ASTM D2171 standard.

The flexibility of the composition of the present invention is measured at the temperature at which the product obtained cracks.

### Example 1

A waterproofing membrane composition is prepared according to a first embodiment of the composition of the present invention by first mixing 5,35 weight % of a recycled plasticized PVB with 0,95 weight % of isopentyl epoxy soyate (compatibilizing agent), available at Proviron's company under the trademark name Proviplast® PLS Green 5, to form a first mixture. Then, 22,6 weight % of APP polymers is added to 52,6 weight % of bitumen to form polymer modified bitumen. The first mixture is added to the polymer modified bitumen to which 18,5 weight % of calcium carbonate is added to form an homogeneous composition forming the waterproofing membrane composition. Each weight percent is expressed in relation to the total weight of the composition.

The performances of the composition of this specific example can be estimated through several parameters such as ring & ball softening point, needle penetration at 60 °C, viscosity at 180 °C and flexibility.

Table 1 below indicates the results of these parameters for the composition of the first embodiment.

**Table 1**

| **Properties** | **Results** |
|---|---|
| Ring & ball softening point | 153 °C |
| Needle penetration at 60°C | 143 dmm |
| Viscosity at 180°C | 12365 cps |
| Flexibility | -24°C |

Such a composition can be used to provide a roof covering waterproofing membrane. The roof covering waterproofing membrane having a reinforcement layer with first and second faces can be manufactured by impregnating the composition of this first embodiment on the first and second faces of the reinforcement layer. The membrane is then dried to provide the final product ready to be applied on the roof of a building.

### Example 2

A waterproofing membrane composition is prepared according to a second embodiment of the composition of the present invention by first mixing 0,48 weight % of a recycled plasticized PVB with 0,08 weight % of isopentyl epoxy soyate (compatibilizing agent), available at Proviron's company under the trademark name Proviplast® PLS Green 5, to form a first mixture. Then, 24,4 weight % of APP polymers is added to 55,64 weight % of bitumen to form polymer modified bitumen. The first mixture is added to the polymer modified bitumen to which 19,4 weight % of calcium carbonate is added to form an homogeneous composition forming the waterproofing membrane composition. Each weight percent is expressed in relation to the total weight of the composition.

The performances of the composition of example 2 can be estimated through several parameters such as ring & ball softening point, needle penetration at 60 °C, viscosity at 180°C and flexibility. Table 2 below indicates the results of these parameters for the composition of the second embodiment.

**Table 2**

| **Properties** | **Results** |
|---|---|
| Ring & ball softening point | 154 °C |
| Needle penetration at 60°C | 95 dmm |
| Viscosity at 180 °C | 9080 cps |
| Flexibility | -20 °C |

Such a composition can be used to provide a roof covering waterproofing membrane. The roof covering waterproofing membrane having a reinforcement layer with first and second faces can be manufactured by impregnating the composition of this first embodiment on the first and second faces of the reinforcement layer. The membrane is then dried to provide the final product ready to be applied on the roof of a building.

### Example 3

A waterproofing membrane composition is prepared according to a third embodiment of the composition of the present invention by first mixing 5,70 weight % of a recycled plasticized PVB provided by Minérale's firm with 1,00 weight % of isopentyl epoxy soyate (compatibilizing agent), available at Proviron's company under the trademark name Proviplast® PLS Green 5, to form a first mixture. This specific recycled PVB received specific treatment (cleaning to remove impurities, sand, talcum, plastic component, and crushed into powder). Then, 17,9 weight % of APP polymers is added to 55,8 weight % of bitumen to form polymer modified bitumen. The first mixture is added to the polymer modified bitumen to which 19,6 weight % of calcium carbonate is added to form an homogeneous composition forming the waterproofing membrane composition. Each weight percent is expressed in relation to the total weight of the composition.

The performances of the composition of this specific example can be estimated through several parameters such as ring & ball softening point, needle penetration at 60 °C, viscosity at 180 °C and flexibility.

Table 3 below indicates the results of these parameters for the composition of the third embodiment.

**Table 3**

| **Properties** | **Results** |
|---|---|
| Ring & ball softening point | 153 °C |
| Needle penetration at 60°C | 202 dmm |
| Viscosity at 180°C | 8300 cps |
| Flexibility | -18 °C |

### Example 4

A waterproofing membrane composition is prepared according to a fourth embodiment of the composition of the present invention by first mixing 5,70 weight % of a virgin PVB (Mowital B 30 HH) with 1 weight % of isopentyl epoxy soyate (compatibilizing agent), available at Proviron's company under the trademark name Proviplast® PLS Green 5, to form a first mixture. Then, 17,9 weight % of APP polymers is added to 55,8 weight % of bitumen to form polymer modified bitumen. The first mixture is added to the polymer modified bitumen to which 19,6 weight % of calcium carbonate is added to form an homogeneous composition forming the waterproofing membrane composition. Each weight percent is expressed in relation to the total weight of the composition.

The performances of the composition of this specific example can be estimated through several parameters such as ring & ball softening point, needle penetration at 60 °C, viscosity at 180 °C and flexibility.

Table 4 below indicates the results of these parameters for the composition of the fourth embodiment.

**Table 4**

| **Properties** | **Results** |
|---|---|
| Ring & ball softening point | 153 °C |
| Needle penetration at 60°C | 93 dmm |
| Viscosity at 180°C | 6200 cps |
| Flexibility | -14 °C |

### Comparative example 1

A waterproofing membrane composition is prepared according to a first comparative example by mixing 24,6 weight % of APP polymers with 55,8 weight % of bitumen to form polymer modified bitumen. Then,19,6 weight % of calcium carbonate is added to form an homogeneous composition forming a known waterproofing membrane composition. Each weight percent is expressed in relation to the total weight of the composition.

| **Properties** | **Results** |
|---|---|
| Ring & ball softening point | 153 °C |
| Needle penetration at 60°C | 130 dmm |
| Viscosity at 180 °C | 11000 cps |
| Flexibility | -26 °C |

## Claims

1. A waterproofing membrane composition comprising active membrane compounds containing:
- Polyvinyl butyral (PVB),
- Polymer modified bitumen, where the polymer forms a polymeric matrix wherein bitumen and PVB are retained,
- At least one compatibilizing agent selected from the group consisting of
∘ A succinate mixed ester of benzyl and of branched nonyl or decyl,
∘ A bis(ethoxylated alkyl) succinate,
∘ A composition comprising aliphatic polycarboxylic acid esters of formula:
▪ R'-X-[O-C(O)-R]n
wherein
R is preferably selected from the group consisting of epoxidized oleic, linoleic, and linolenic acid and mixture thereof, or R is equal to R¹ being a tetrahydrofurfuryl group, or a substituted tetrahydrofurfuryl group, or R is equal to R² being an alkoxylated alkyl group, or a substituted alkoxylated alkyl group, different from R¹;
R' is a methyl group when R is selected from the group consisting of epoxidized oleic, linoleic, and linolenic acid and mixture thereof, X is CH₂- radical and n is 1; or R' is Y-OC(O)-group wherein Y is equal to R¹ being a tetrahydrofurfuryl group, or a substituted tetrahydrofurfuryl group, or Y is equal to R² being an alkoxylated alkyl group, or a substituted alkoxylated alkyl group, different from R¹ ,
X is an alkyl group, preferably an ethyl group, or an hydroxyl-substituted alkyl group comprising from 1 to 4 carbon atoms, and
n is 1 or 2,
or a mixture thereof.

2. Waterproofing membrane composition according to claim 1, wherein the aliphatic polycarboxylic acid esters is of formula (II) and of formula (I) or (III):
- R'-X-[C(O)O-R¹]n (I)
- R'-X-[C(O)O-R²]n (II)
- R'-X-[C(O)O-R²]n (III)
Wherein
R' is Y-OC(O)- group wherein Y is equal to R¹ being a tetrahydrofurfuryl group, or a substituted tetrahydrofurfuryl group, or Y is equal to R² being an alkoxylated alkyl group, or a substituted alkoxylated alkyl group, different from R¹.

3. Waterproofing membrane composition according to claim 1, wherein the aliphatic polycarboxylic acid esters is an epoxidized epoxy soyate being derived from vegetable oils and presenting the following formula:
CH₃-CH₂-O-C(O)-R,
wherein R is preferably selected from the group consisting of epoxidized oleic, linoleic, linolenic acid and mixture thereof.

4. Waterproofing membrane composition according to any one of the preceding claims, comprising between 0,01 and 10 % in weight, preferably between 0,01-5 % in weight, of said compatibilizing agent, with respect to the total weight of the composition.

5. Waterproofing membrane composition according to any one of the preceding claims, comprising between 0,01 and 20 % in weight of PVB, preferably between 0,01 and 17 % in weight, more preferably between 0,01 and 14 % in weight, most preferably between 0,01 to 13 % in weight with respect to the total weight of the composition.

6. Waterproofing membrane composition according to any one of the preceding claims, wherein the PVB is chosen from the group consisting of a recycled plasticized PVB, a production plasticized PVB and a virgin PVB, preferably coming from the automotive industry.

7. Waterproofing membrane composition according to claim 6, comprising between 65 and 95 % in weight, preferably between 85 and 90 % in weight, more preferably equal to 85 % in weight of a recycled plasticized PVB or a virgin PVB, and between 5 and 25% in weight, preferably between 10-20 % in weight, more preferably equal to 15 % in weight of the compatibilizing agent, each weight percent is expressed in relation to a mixture comprising the compatibilizing agent and the virgin or plasticized PVB.

8. Waterproofing membrane composition according to any one of the preceding claims, wherein the recycled or production plasticized PVB, preferably coming from the automotive industry, comprises a plasticizer different from said compatibilizing agent.

9. Waterproofing membrane composition according to any one of the preceding claims, wherein bitumen is present in an amount comprised between 40 and 80 weight %, with respect to the total weight of the composition.

10. Waterproofing membrane composition according to any one of the preceding claims, wherein the polymer is present in an amount comprised between 0,1 and 30 weight %, with respect to the total weight of the composition.

11. Waterproofing membrane composition according to any one of the preceding claims, wherein the polymer to modify the bitumen is chosen from the group consisting of Styrene-Butadiene-Styrene (SBS), Styrene-Ethylene-Butene-Styrene (SEBS), Styrene-Ethylene-Propylene-Styrene (SEPS), Dimethyl-Gamma-Butyrolactone Acrylate (DBA), Styrene-Isoprene-Styrene (SIS), Polyisobutylene (PIB), Polyhydroxybutyrate, Atactic Polypropylene (APP), Isotactic Polypropylene (IPP), Syndiotactic Polypropylene (SPP), Ethylene-Vinyl-Acetate (EVA) and combinations thereof.

12. Process for manufacturing the waterproofing membrane composition according to any one of the preceding claims, comprising the steps of:
- Mixing PVB with bitumen and at least one compatibilizing agent for forming a mixture,
- Adding a polymer to the mixture until reaching the phase inversion to provide polymer modified bitumen, where the polymer forms a polymeric matrix, wherein bitumen and PVB are retained,

13. Process according to claim 12, comprising a step of adding a filler to the homogeneous composition, which filler is chosen from the group consisting of calcium carbonate, preferably colemanite or aluminate trihydrate (ATH).

14. Roof waterproofing membrane provided with at least one reinforcement layer impregnated with a composition according to any one of claims 1 to 11.

15. Process for manufacturing a waterproofing membrane for roof covering, comprising the steps of:
- Providing a reinforcement layer having a first face and a second face,
- Impregnating the composition, according to any one of claims 1 to 11, on at least the first face of the reinforcement layer to provide the waterproofing membrane for roof covering.
